# FASCICULE DE BREVET EUROPEEN

(11) **EP 1 055 564 B1**
(45) Date de publication et mention de la délivrance du brevet: **02.11.2005**
(21) Numéro de dépôt: 00111251.5
(22) Date de dépôt: 25.05.2000
(51) Int. Cl.: B60R 16/02

(54) **Tableau de bord de véhicule avec un faisceau électrique**
Kraftfahrzeugarmaturenbrett mit elektrischem Kabelbaum
Vehicle dashboard with an electric wire harness

(30) Priorité: 28.05.1999 FR 9906776
(43) Date de publication de la demande: 29.11.2000
(73) Titulaire: VALEO ELECTRONIQUE, 94000 Creteil (FR); VISTEON SYSTEMES INTERIEURS S.A.S., 92927 La Défense Cédex (FR)
(72) Inventeur: Barat, Didier, 92190 Meudon (FR); Nash, Andrew, 78120 Clairefontaine (FR)
(74) Mandataire: Santarelli

(56) Documents cités:
- EP-A- 0 796 767
- EP-A- 0 904 986
- DE-A- 2 342 379
- DE-A- 19 720 714
- FR-A- 2 687 854
- US-A- 5 623 169
- US-A- 5 676 552

## Description

L'invention concerne un tableau de bord pour véhicule automobile ayant un poste de conduite latéral, ledit tableau de bord étant susceptible d'être monté sur le tablier séparant un compartiment avant de l'habitacle dudit véhicule et étant équipé d'une pluralité de dispositifs électriques qui sont disposés soit dans la partie droite dudit tableau de bord, soit dans sa partie gauche, selon la position du poste de conduite, et d'un faisceau électrique principal sur lequel se raccordent une pluralité de faisceaux secondaires pour la connexion desdits dispositifs électriques.

Dans un véhicule automobile, il est nécessaire de réaliser la connexion électrique des différents dispositifs équipant le tableau de bord soit entre eux soit avec d'autres moyens électriques disposés notamment dans le compartiment moteur ou l'habitacle. On utilise, pour réaliser cette connexion, un ou plusieurs faisceaux électriques secondaires qui se présentent chacun sous la forme d'un toron de plusieurs conducteurs ou d'un circuit flexible, qui sont raccordés à un faisceau principal, et qui sont munis, à leurs extrémités libres, de un ou plusieurs connecteurs, l'ensemble formant une pieuvre dont les bras partent dans différentes directions.

En général, le faisceau principal équipant le tableau de bord s'étend transversalement et les faisceaux secondaires du tableau de bord sont raccordés au faisceau principal selon le trajet le plus court.

De plus en plus, dans l'industrie automobile, on monte les éléments de commande et les dispositifs électriques standards et optionnels sur le tableau de bord dans des ateliers indépendants des chaînes de montage des véhicules. Le module ainsi constitué est ensuite monté sur le châssis du véhicule. Il ne reste plus qu'à raccorder le faisceau principal du tableau de bord au faisceau électrique du châssis. Cette technique facilite le montage de l'ensemble.

Les faisceaux électriques sont réalisés avant leur montage sur le tableau de bord ou sur la caisse du véhicule, conformément aux caractéristiques du véhicule à équiper.

Du fait de la diversité des accessoires et dispositifs susceptibles d'équiper un type de véhicule, notamment au niveau du tableau de bord, le nombre de variantes de faisceaux susceptibles d'être utilisés dans un atelier de montage de tableau de bord est relativement élevé. Ceci peut créer des problèmes au niveau de la gestion des différents stocks de faisceaux et génère des coûts élevés.

En outre, il est nécessaire de prévoir, pour chaque modèle de véhicule, deux jeux de faisceaux électriques selon que le véhicule à équiper est prévu avec le volant à droite ou le volant à gauche.

En effet, différents modules électriques tels que l'instrumentation, le module haut de colonne, l'air bag passager, la boîte à gants, sont localisés différemment suivant qu'il s'agit d'un véhicule avec la direction à droite, ou d'un véhicule avec la direction à gauche.

On connaît d'après le document US 5 623 169 (Preambule de la revendication 1) une structure de faisceaux électriques pour un véhicule automobile ayant un poste de conduite latéral et qui comporte plusieurs faisceaux électriques auxquels sont raccordés divers dispositifs éléctriques.

L'invention s'est donné pour but de fournir une disposition de faisceau électrique dans le tableau de bord qui permette, avec le même faisceau électrique, d'équiper indifféremment un tableau de bord prévu pour un véhicule ayant le volant à droite ou prévu pour un véhicule ayant le volant à gauche.

L'invention atteint son but par les caractéristiques de la revendication 1.

De préférence, lesdits faisceaux secondaires sont raccordés à un tronçon de faisceau principal qui s'étend sensiblement dans le plan médian du tableau de bord.

Dans le cas où le tableau de bord est équipé d'un boîtier de console centrale, le tronçon de faisceau principal sur lequel se raccordent lesdits faisceaux secondaires est avantageusement monté dans ledit boîtier.

Pour permettre le positionnement aisé de ces faisceaux secondaires vers la droite ou vers la gauche, ces faisceaux sont de préférence constitués par des circuits flexibles.

D'autres avantages et caractéristiques de l'invention ressortiront à la lecture de la description suivante faite à titre d'exemple et en référence aux dessins annexés dans lesquels :
la figure 1 montre schématiquement la disposition d'un faisceau électrique selon l'invention dans un tableau de bord d'un véhicule automobile ayant le volant à gauche ;
la figure 2 montre la disposition du même faisceau électrique dans un tableau de bord pour véhicule automobile ayant le volant à droite ;
la figure 3 montre une variante de faisceau électrique selon l'invention pour un tableau de bord de véhicule ayant le volant à gauche ;
la figure 4 montre la variante de faisceau électrique de la figure 3 pour un tableau de bord de véhicule ayant le volant à droite ;
les figures 5a, 5b montrent un exemple de pliage d'un circuit flexible pour connecter un dispositif électrique situé à droite ou à gauche du tableau de bord ;
les figures 6a, 6b montrent un autre exemple de pliage de circuits flexibles pour connecter des dispositifs électriques situés soit à droite soit à gauche du tableau de bord.

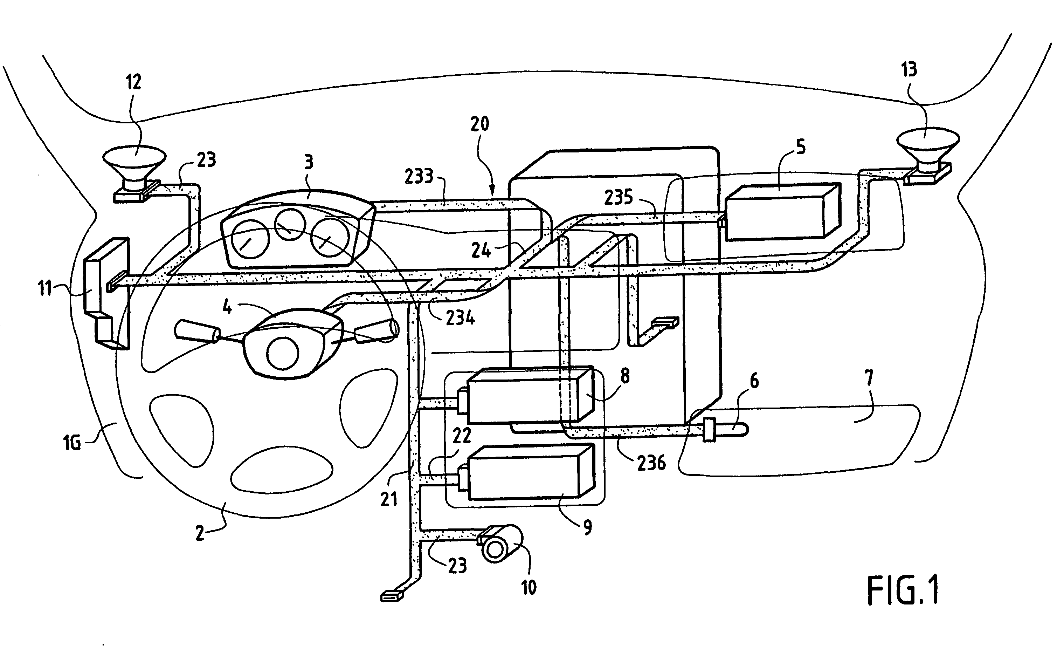

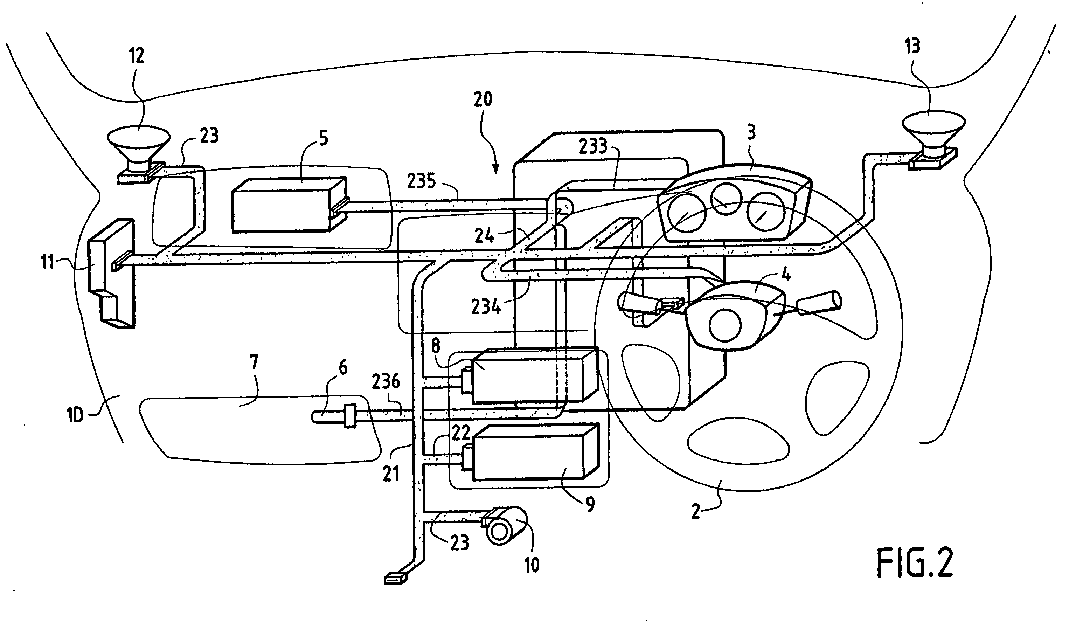

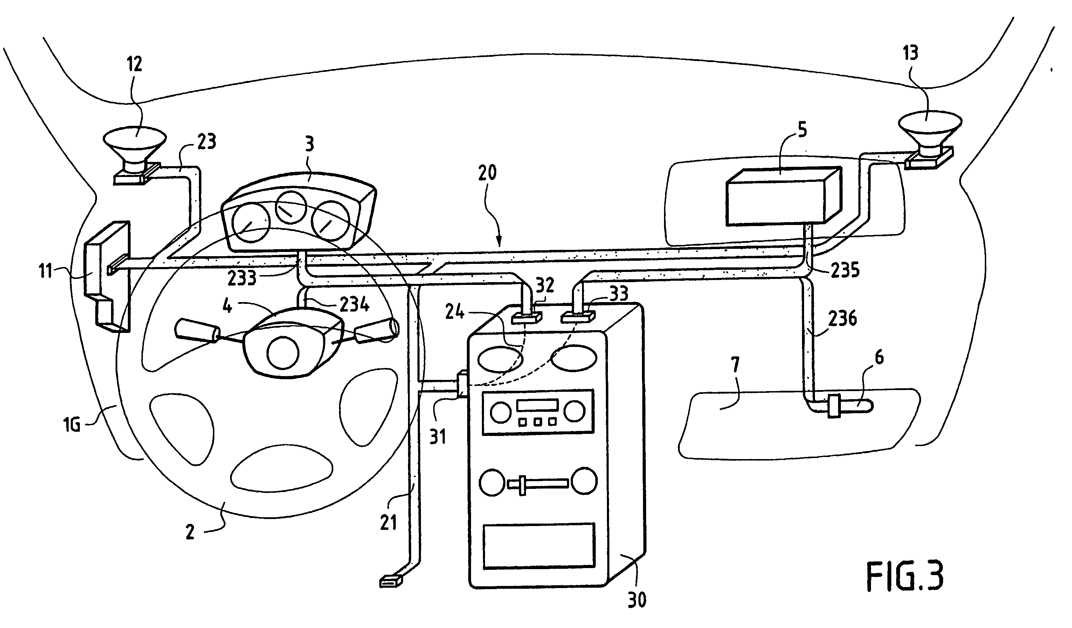

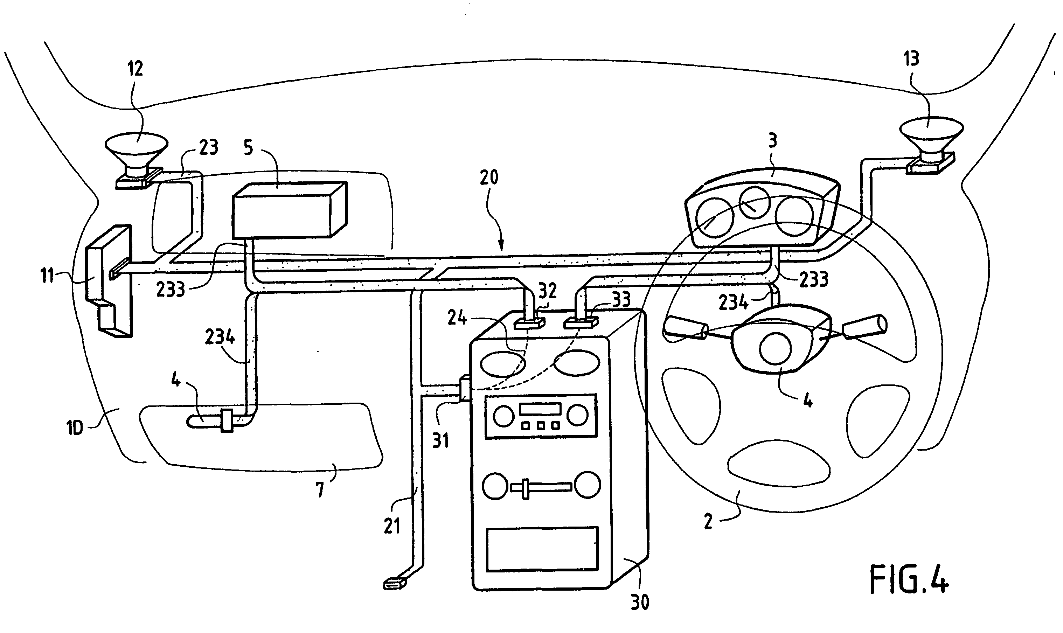

Sur les dessins on a représenté par la référence 1G (figures 1 et 3) un tableau de bord pour un véhicule ayant le volant 2 à gauche et par la référence 1D (figures 2 et 4) un tableau de bord pour un véhicule ayant le volant 2 à droite. Le tableau de bord 1G, 1D sépare le compartiment avant du véhicule de son habitacle.

Le tableau de bord 1G, 1D est équipé de plusieurs dispositifs électriques qui sont disposés soit dans la partie droite du tableau de bord, soit dans la partie gauche selon la position à droite ou à gauche du volant. Il s'agit notamment de l'instrumentation 3, du module haut de colonne 4, de l'air bag 5 du passager et du dispositif d'éclairage 6 de la boîte à gants 7. L'instrumentation 3 et le module haut de colonne 4 sont disposés du côté du volant en face du conducteur, tandis que l'air bag 5 du passager et le dispositif d'éclairage 6 de la boîte à gants 7 sont disposés de l'autre côté du véhicule, en face du passager avant.

D'autres dispositifs électriques, tels que la radio 8, le tableau de commande 9 du dispositif de ventilation chauffage et/ou climatisation, le système de navigation, le téléphone ou l'allume-cigare 10 sont disposés dans la partie médiane du tableau de bord 1G, 1D.

Enfin, le module de contrôle 11 ou boîtier de servitude intelligent équipant certains véhicules, afin de commander et de gérer la puissance de différents modules électriques du véhicule, et des haut-parleurs 12, 13 sont prévus soit à droite du tableau de bord soit à gauche du tableau de bord indépendamment du fait que ce tableau de bord est prévu pour un véhicule ayant le volant 2 à droite ou à gauche.

Les différents dispositifs électriques équipant le tableau de bord sont reliés entre eux et avec d'autres équipements électriques de l'habitacle, du compartiment moteur et du châssis par un faisceau électrique 20, formant une pieuvre, qui comporte un faisceau principal 21 fixé sur le tableau de bord, sur lequel se raccordent des faisceaux secondaires 23 comportant à leurs extrémités libres des connecteurs 22 pour la connexion des différents dispositifs électriques.

Les faisceaux secondaires 23 qui sont reliés aux dispositifs électriques disposés au centre du tableau de bord (la radio 8, le tableau de commande 9 et l'allume-cigare 10) et aux dispositifs latéraux positionnés indépendamment de la position du volant 2 (module de contrôle 11, haut-parleurs 12, 13) sont raccordés au faisceau principal 21 par le trajet le plus court.

En revanche, les faisceaux secondaires 23, qui sont reliés aux dispositifs électriques disposés soit dans la partie droite du tableau de bord soit dans sa partie gauche, selon la position à droite ou à gauche du volant 2, sont raccordés à un tronçon 24 du faisceau principal 21 situé sensiblement dans le plan vertical médian du tableau de bord 1.

Grâce à cette disposition, le même faisceau électrique 20 peut être utilisé indifféremment pour équiper un tableau de bord 1G pour un véhicule ayant le volant 2 à gauche, et un tableau de bord 1D pour un véhicule ayant le volant 2 à droite.

Le raccordement des faisceaux secondaires au faisceau principal peut être réalisé grâce à des épissures, dans le cas de l'utilisation d'un faisceau traditionnel, ou par l'intermédiaire de connecteurs. Mais dans la plupart des cas, le faisceau secondaire ne sera en fait qu'une partie du faisceau principal.

Dans le cas de l'utilisation d'un circuit flexible, le faisceau secondaire peut être une partie du faisceau principal grâce à une découpe particulière du faisceau principal. Le faisceau secondaire peut également être relié au faisceau principal par soudure ou par des agrafes.

Pour faciliter le rabattement vers la droite ou vers la gauche, selon le cas, du faisceau secondaire 233 connecté à l'instrumentation 3, du faisceau secondaire 234 connecté au module haut de colonne 4, du faisceau secondaire 235 connecté à l'air bag 5 du passager et du faisceau secondaire 236 relié au dispositif d'éclairage 6 de la boîte à gants, ces faisceaux secondaires et le faisceau principal sont réalisés de préférence par des circuits flexibles plats.

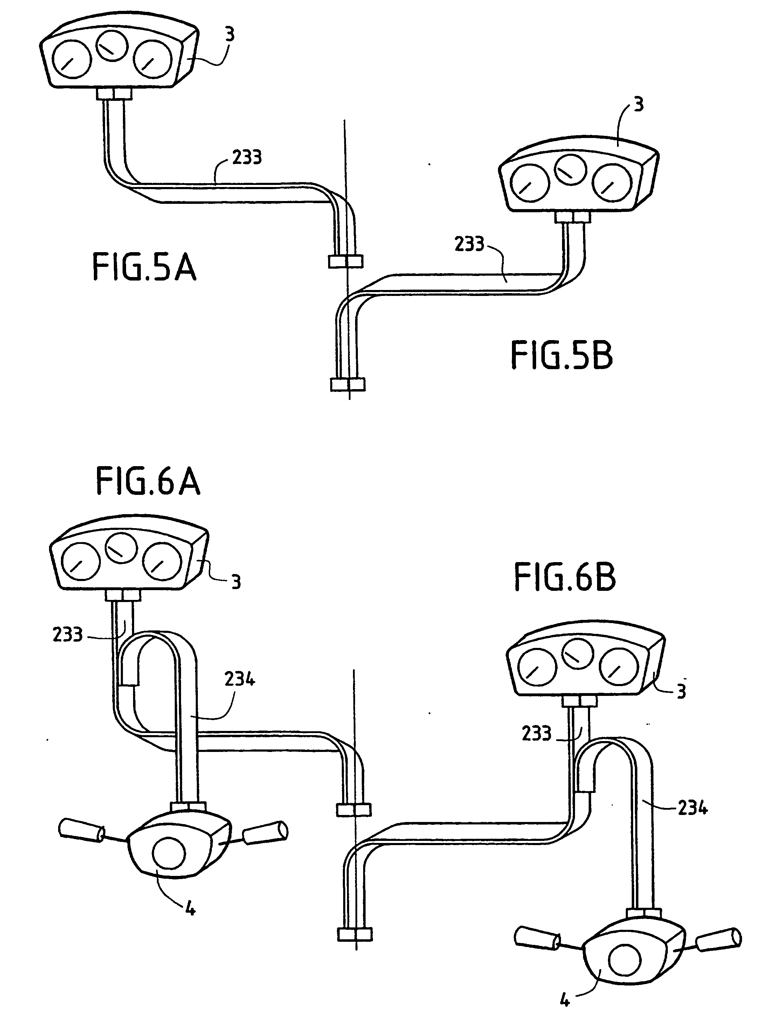

Les figures 5a et 5b montrent le double pliage à 90° que l'on fait subir au faisceau secondaire 233 pour réaliser la connexion de l'instrumentation 3 disposée à gauche du tableau de bord 1G (figure 5a) ou à droite du tableau de bord 1D (figure 5b).

Ainsi que cela est montré sur les figures 6a, 6b, les deux faisceaux secondaires 233 et 234 peuvent être réunis ensemble sur une grande partie de leur longueur par agrafage ou par tout moyen approprié, puis diverger dans des directions opposées parallèles au plan médian du tableau de bord 1G, 1D, en regard de l'instrumentation 3 et du module haut de colonne 4.

Les figures 3 et 4 montrent une variante de réalisation de l'invention dans laquelle le tableau de bord 1G ou 1D est équipé d'un boîtier 30 de console centrale. Ici, le tronçon central 24 du faisceau électrique est intégré dans le boîtier 30, ce dernier comportant un premier connecteur 31 pour sa liaison au faisceau électrique 20, et deux connecteurs 32, 33 pour la connexion des faisceaux secondaires 233 et 234, d'une part, et des faisceaux secondaires 235 et 236, d'autre part.

Dans le cas d'un faisceau traditionnel, on utilise divers câbles en cuivre isolé par un enrobement de matière plastique. Le diamètre de chacun de ces câbles est adapté en fonction du courant qui les traverse et de la résistance mécanique qu'ils doivent assurer. En cas de besoin on peut créer des équipotentielles en réalisant des épissures par soudage. L'ensemble des câbles sont assemblés par enrubannage ou autres techniques afin d'obtenir un faisceau. Des connecteurs sont utilisés aux extrémités afin de permettre l'interconnexion avec les divers modules électriques.

Dans le cas d'un circuit flexible, on utilise un substrat en polyester, en PEN ou en poly-imide (ou autres) sur lequel on dépose une couche de cuivre (l'épaisseur de cuivre peut varier suivant les applications de 35 µm à 140 µm). Un procédé chimique permet ensuite de délimiter différentes pistes par attaque sélective du cuivre. Une couche de vernis permet de protéger le circuit contre la corrosion, l'humidité et les contraintes mécaniques. En cas de besoin on peut créer des équipotentielles par soudure (plastique et cuivre) ou par agrafage. Des connecteurs spécifiques Flex sont utilisés pour l'interconnexion.

## Revendications

1. Tableau de bord pour véhicule automobile ayant un poste de conduite latéral à gauche ou à droite, équipé d'une pluralité de dispositifs électriques (3, 4, 5, 6) disposés soit dans la partie droite dudit tableau de bord, soit dans sa partie gauche selon la position du poste de conduite, d'un faisceau électrique (20) comportant faisceau électrique principal (21) sur lequel se raccordent une pluralité de faisceaux secondaires (233, 234, 235, 236) pour la connexion desdits dispositifs électriques,
**caractérisé par le fait que** lesdits faisceaux secondaires (233, 234, 235, 236) sont raccordés au faisceau principal (21) dans la zone médiane dudit tableau de bord et sont rabattables vers la droite ou vers la gauche selon la position du poste de conduite.

2. Tableau de bord selon la revendication 1, **caractérisé par le fait que** les faisceaux secondaires (233, 234, 235, 236) sont raccordés à un tronçon (24) de faisceau principal (21) disposé dans le plan médian dudit tableau de bord.

3. Tableau de bord selon la revendication 2, **caractérisé par le fait que** ledit tableau de bord est équipé d'un boîtier (30) de console centrale, et **par le fait que** le tronçon (24) du faisceau principal (21), sur lequel se raccordent lesdits faisceaux secondaires (233, 234, 235, 236), est monté dans ledit boîtier (30).

4. Tableau de bord selon l'une quelconque des revendications 1 à 3, **caractérisé par le fait que** lesdits faisceaux secondaires (233, 234, 235, 236) sont constitués par des circuits flexibles.

## Patentansprüche

1. Armaturenbrett für Kraftfahrzeug, das einen auf der linken oder der rechten Seite befindlichen Fahrerplatz besitzt, mit mehreren elektrischen Vorrichtungen (3, 4, 5, 6), die je nach Position des Fahrerplatzes entweder im rechten Teil des Armaturenbretts oder in seinem linken Teil angeordnet sind, und mit einem Stromleitungsbündel (20), das ein Hauptstromleitungsbündel (21) aufweist, mit dem mehrere sekundäre Leitungsbündel (233, 234, 235, 236) für den Anschluss der elektrischen Vorrichtungen verbunden sind,
**dadurch gekennzeichnet, dass** die sekundären Leitungsbündel (233, 234, 235, 236) mit dem Hauptleitungsbündel (21) in der mittleren Zone des Armaturenbretts verbunden sind und je nach Position des Fahrerplatzes nach rechts oder nach links umklappbar sind.

2. Armaturenbrett nach Anspruch 1, **dadurch gekennzeichnet, dass** die sekundären Leitungsbündel (233, 234, 235, 236) mit einem Teilstück (24) des Hauptleitungsbündels (21) verbunden sind, das in der Mittelebene des Armaturenbretts angeordnet ist.

3. Armaturenbrett nach Anspruch 2, **dadurch gekennzeichnet, dass** das Armaturenbrett mit einem Mittelkonsolengehäuse (30) ausgerüstet ist und dass das Teilstück (24) des Hauptleitungsbündels (21), mit dem die sekundären Leitungsbündel (233, 234, 235, 236) verbunden sind, in dem Gehäuse (30) angebracht ist.

4. Armaturenbrett nach einem der Ansprüche 1 bis 3, **dadurch gekennzeichnet, dass** die sekundären Leitungsbündel (233, 234, 235, 236) durch flexible Leitungen gebildet sind.

## Claims

1. Instrument panel for motor vehicles with a driver station on the left-hand or right-hand side, comprising a plurality of electrical devices (3, 4, 5, 6) disposed either in the right-hand portion of said instrument panel or in its left-hand portion, according to the position of the driver station, and an electrical wiring harness (20) including a main electrical wiring harness (21) to which are connected a plurality of secondary wiring harnesses (233, 234, 235, 236) for connecting said electrical devices, **characterized in that** said secondary wiring harnesses (233, 234, 235, 236) are connected to the main wiring harness (21) in the median area of said instrument panel and are adapted to be bent either toward the right or toward the left according to the position of the driver station.

2. Instrument panel according to claim 1, **characterized in that** the secondary wiring harnesses (233, 234, 235, 236) are connected to a section (24) of the main wiring harness (21) disposed in the median plane of said instrument panel.

3. Instrument panel according to claim 2, **characterized in that** said instrument panel comprises a central console casing (30) and **in that** the section (24) of the main wiring harness (21) to which said secondary wiring harnesses (233, 234, 235, 236) are connected is mounted in said central console casing (30).

4. Instrument panel according to any one of claims 1 to 3, **characterized in that** said secondary wiring harnesses (233, 234, 235, 236) consist of flexible circuits.
